# EUROPEAN PATENT SPECIFICATION

(11) **EP 4 564 663 B1**
(45) Date of publication and mention of the grant of the patent: **05.08.2026**
(21) Application number: 22934562.4
(22) Date of filing: 04.08.2022
(51) Int. Cl.: H02S 20/30, F24S 30/48, F24S 25/50

(54) **ROTARY FLEXIBLE PHOTOVOLTAIC SUPPORT**
ROTIERENDER FLEXIBLER FOTOVOLTAISCHER TRÄGER
SUPPORT PHOTOVOLTAÏQUE FLEXIBLE ROTATIF

(30) Priority: 01.04.2022 CN 202210348621
(43) Date of publication of application: 04.06.2025
(73) Proprietor: Huaneng Clean Energy Research Institute, Beijing 102209 (CN); Huaneng (Jiayuguan) New Energy Co., Ltd., Jiayuguan, Gansu 735106 (CN)
(72) Inventor: LUO, Lizhen, Beijing 102209 (CN); XIAO, Ping, Beijing 102209 (CN); PENG, Wenbo, Beijing 102209 (CN); CHEN, Xiongfei, Beijing 102209 (CN); ZHANG, Hua, Beijing 102209 (CN); ZHAO, Dongming, Beijing 102209 (CN); WANG, Lichuang, Beijing 102209 (CN); TIAN, Hongxiang, Beijing 102209 (CN); LI, Xiaolei, Beijing 102209 (CN); LI, Menglei, Beijing 102209 (CN); GAO, Hu, Beijing 102209 (CN); CHEN, Zhicai, Beijing 102209 (CN); ZHANG, Jingwen, Beijing 102209 (CN); LUO, Bin, Beijing 102209 (CN); YANG, Guangyan, Beijing 102209 (CN); XIAO, Xin, Beijing 102209 (CN)
(74) Representative: Metida
(86) International application number: PCT/CN2022/100600
(87) International publication number: WO 2023/184739

(56) References cited:
- WO-A1-2009/006354
- WO-A1-2017/179779
- WO-A2-2008/064382
- CN-A- 114 710 100
- CN-U- 202 645 911
- CN-U- 202 645 911
- JP-A- 2020 198 746

## Description

### TECHNICAL FIELD

The disclosure relates to the technical field of photovoltaic, in particular to a rotating flexible photovoltaic bracket.

### BACKGROUND

The flexible photovoltaic support changes the purlin in the traditional rigid support technology into steel strand, that is, photovoltaic assembly is installed on rows of steel strands. The pre-tension of steel strand is provided by the first line method, and the two ends of the steel strands are connected by rigid supports, which can realize a large spacing of 10-30m. Sliders are arranged at the two ends of the steel strand, and the angle of the photovoltaic assembly is changed by sliding the sliders up and down, so that the solar tracking of the photovoltaic assembly is realized. With the lifting or lowering of the two sliders at the end of the steel strand, the position between the two sliders changes, which leads to the change of the required length of the steel strand between the two sliders. Because it is difficult to adjust the length of the steel strand between the two sliders, it is inconvenient to adjust the angle of the photovoltaic panel.

In a reference document D1 (CN202645911U), the utility model discloses a sunflower type power-storage-free solar photovoltaic pump which comprises a panel photovoltaic assembly, a two-dimensional sun tracking device, a controller, a direct current motor and a water pump. A tracking mechanism in the two-dimensional sun tracking device comprises a swinging type elevating angle tracking mechanism, a first hinge, an inclined shaft solar azimuth tracking mechanism, a second hinge, a vertical fixing type elevating angle tracking mechanism. The inclined shaft solar azimuth tracking mechanism comprises an inclined shaft and a driving device, the driving device is installed at the top end of the vertical fixing type elevating angle tracking mechanism and is connected with the inclined shaft, and two ends of the inclined shaft are respectively connected with the top ends of the swinging type elevating angle tracking mechanism and the vertical fixing type elevating angle tracking mechanism through the first hinge and the second hinge. Due to the fact that the double-lifting column type solar azimuth tracking mechanism is adopted, the tracking range of solar azimuth can be adjusted within a large angle, and the sunflower type power-storage-free solar photovoltaic pump has the advantages of being simple in structure and low in cost.

### SUMMARY

The disclosure aims at solving at least one of the technical problems in the above related background art to some extent.

Therefore, an embodiment of the disclosure proposes a rotating flexible photovoltaic bracket to facilitate the angle adjustment of photovoltaic panels.

The rotating flexible photovoltaic bracket of the embodiment of the disclosure includes columns, first connecting pieces and lifting assemblies.

Each of the columns includes a threaded section, and the threaded section is provided with an internal thread; a plurality of the columns are provided, where the plurality of columns include a first group of columns and a second group of columns, where the first group of columns includes a first column and a second column arranged at intervals along a first direction, and the second group of columns includes a third column and a fourth column arranged at intervals along the first direction; the first group of columns and the second group of columns are arranged along a second direction, the first direction is orthogonal to an up-and-down direction, the second direction is orthogonal to the up-and-down direction, and an angle is formed between the first direction and the second direction.

The first connecting pieces are provided at least two and are used for installing photovoltaic panels; at least one of the first connecting pieces is connected between the first column and the fourth column; at least one of the first connecting pieces is connected between the second column and the third column, and the first connecting pieces between the first column and the fourth column and the first connecting pieces between the second column and the third column are crossed.

A plurality of lifting assemblies are provided, the plurality of lifting assemblies correspond to the plurality of columns one by one, and each of the lifting assemblies is connected with a corresponding one of the columns and a position of each of the lifting assemblies relative to the corresponding one of the columns is adjustable in the up-and-down direction.

Each of the lifting assemblies includes a lifting rod, a lower end of the lifting rod extends into a corresponding one of the columns, and the lifting rod is provided with an external thread being matched with the internal thread, so that the lifting rod is capable of moving in the up-and-down direction along corresponding one of the columns under an action of thread transmission, the lifting rod is provided with a spiral groove, the spiral groove is circumferentially arranged around the lifting rod, a rotation direction of the spiral groove is opposite to a rotation direction of the external thread, each of the first connecting pieces is connected with corresponding one of the columns through the lifting rod, and at least a part of each of the first connecting pieces is wound in the spiral groove.

When the lifting rod moves in the up-and-down direction, the spiral groove is used for driving corresponding one of the first connecting pieces to expand and contract, so as to adjust a length of each of the first connecting pieces between two spiral grooves.

The rotating flexible photovoltaic bracket in the embodiment of the disclosure has the advantages of convenient adjustment of the photovoltaic panel angle and the like.

In some embodiments, each of the lifting assemblies further includes a first rotating shaft, and the first rotating shaft is used for supporting corresponding one of the first connecting pieces extending from an upper end of the spiral groove, so that the corresponding one of the first connecting pieces rotates spirally in the spiral groove.

In some embodiments, each of the lifting assemblies further includes a second rotating shaft, the second rotating shaft and the first rotating shaft are arranged at intervals in the up-and-down direction, and the second rotating shaft is used for supporting corresponding one of the first connecting pieces extending from a lower end of the spiral groove, so that each of the first connecting pieces rotates spirally in the spiral groove.

In some embodiments, each of the lifting assemblies further includes a support frame, the support frame is rotatably connected with the lifting rod around an axis of the lifting rod, and each of the first rotating shaft and the second rotating shaft is connected with the support frame.

In some embodiments, the rotating flexible photovoltaic bracket further includes at least two parallel second connecting pieces, where one end of each of the second connecting pieces is connected with at least one of the first connecting pieces, and an other end of each of the second connecting pieces is connected with at least one of the first connecting pieces, and the second connecting pieces are used for installing the photovoltaic panels.

In some embodiments, each of the second connecting pieces is a connecting rod, and both ends of each of the second connecting pieces are respectively provided with sliding rails extending along a length thereof; each of the sliding rails is provided with a slider matched with corresponding one of the sliding rails, the slider is capable of sliding along an extending direction of corresponding one of the sliding rails; the slider is provided with a perforation, and each of the second connecting pieces is connected with corresponding one of the first connecting pieces through the perforation.

In some embodiments, the rotating flexible photovoltaic bracket further includes driving parts, each of the driving parts is connected with corresponding one of the columns and each of the driving parts is used for driving corresponding the lifting rod to rotate.

In some embodiments, the rotating flexible photovoltaic bracket further includes active parts and passive parts, one of the active parts is arranged on each of the columns, each of the driving parts is connected with corresponding one of the active parts, each of the passive parts is connected with the lifting rod, and the active parts are matched with the passive parts so that each of the driving parts drives the lifting rod to rotate.

In some embodiments, each of the active parts is a first gear, and each of the passive parts is a second gear, the first gear is meshed with the second gear, and a length of the second gear in an extension direction thereof is greater than a length of the first gear in an extension direction thereof.

In some embodiments, the first connecting pieces are steel strands.

In some embodiments, each of the columns further includes an installation section, the threaded section is connected with the installation section in sequence from top to bottom, and the installation section is used for being installed on a foundation.

### BRIEF DESCRIPTION OF THE DRAWINGS

FIG. 1 is a usage state diagram of a rotating flexible photovoltaic bracket according to an embodiment of the disclosure;
FIG. 2 is a usage state diagram of the first connecting pieces and the second connecting pieces according to an embodiment of the disclosure;
FIG 3 is a schematic structural diagram of a lifting assembly according to another embodiment of the disclosure;
FIG. 4 is a schematic structural diagram of the connection between the first connecting piece and the second connecting piece according to another embodiment of the disclosure;
FIG. 5 is a schematic diagram of the use state of the second column and the third column according to another embodiment of the disclosure;
FIG. 6 is a schematic diagram of a use state of the first connecting piece and the second connecting piece according to another embodiment of the disclosure; and
FIG. 7 is a schematic diagram of another use state of the first connecting piece and the second connecting piece according to another embodiment of the disclosure.

List of reference character: 100 rotating flexible photovoltaic bracket; 1 column; 101 first column; 102 second column; 103 third column; 104 fourth column; 105 threaded section; 106 installation section; 2 first connecting piece; 3 second connecting piece; 301 sliding rail; 302 slider; 303 perforation; 4 lifting assembly; 4011 first rotating shaft; 4012 second rotating shaft; 4013 support frame; 402 lifting rod; 4021 spiral groove; 501 driving part; 502 active part; 503 passive part; 504 reducer; 601 first gear; 602 second gear; and 7 photovoltaic panel.

### DETAILED DESCRIPTION OF THE EMBODIMENTS

In the following, embodiments of the disclosure will be described in detail, examples of which are illustrated in the accompanying drawings. The embodiments described below by referring to the drawings are exemplary and are intended to explain the disclosure, but not to be construed as limiting the disclosure.

Hereinafter, the technical scheme of the disclosure will be described in detail with reference to the attached drawings.

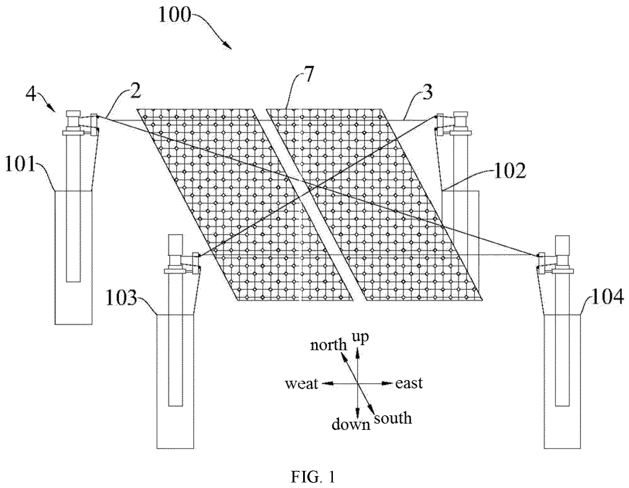

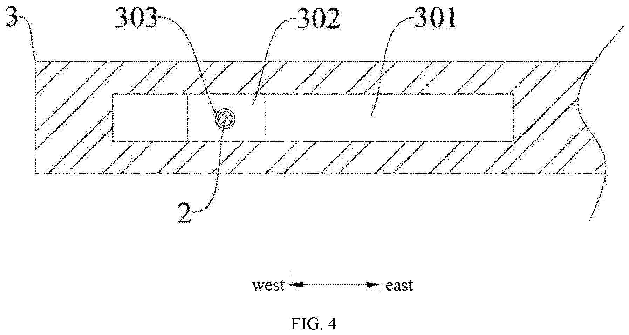

As shown in FIGs. 1 to 7, the rotating flexible photovoltaic bracket 100 of the embodiment of the disclosure includes columns 1, first connecting pieces 2 and lifting assemblies 4. Each of the columns 1 includes a threaded section 105, and the threaded section 105 is provided with an internal thread. Multiple columns are provided, where the multiple columns include a first group of columns and a second group of columns. The first group of columns includes a first column 101 and a second column 102 arranged at intervals along a first direction, and the second group of columns includes a third column 103 and a fourth column 104 arranged at intervals along the first direction. The first group of columns and the second group of columns are arranged along a second direction. The first direction is orthogonal to an up-and-down direction, the second direction is orthogonal to the up-and-down direction, and an angle is formed between the first direction and the second direction;

At least one of the first connecting pieces 2 is connected between the first column 101 and the fourth column 104; at least one of the first connecting pieces 2 is connected between the second column 102 and the third column 103, and the first connecting pieces 2 between the first column 101 and the fourth column 104 and the first connecting pieces 2 between the second column 102 and the third column 103 are crossed. Multiple lifting assemblies 4 are provided, the multiple lifting assemblies 4 correspond to multiple columns 1 one by one, and each of the lifting assemblies 4 is connected with a corresponding one of the columns 1 and a position of each of the lifting assemblies relative to the corresponding one of the columns 1 is adjustable in the up-and-down direction.

Each of the lifting assemblies includes a lifting rod 402, a lower end of the lifting rod 402 extends into a corresponding one of the columns 1, and the lifting rod 402 is provided with an external thread being matched with the internal thread, so that the lifting rod 402 is capable of moving in the up-and-down direction along corresponding one of the columns 1 under an action of thread transmission. The lifting rod 402 is provided with a spiral groove 4021, the spiral groove 4021 is circumferentially arranged around the lifting rod 402, a rotation direction of the spiral groove 4021 is opposite to a rotation direction of the external thread. Each of the first connecting pieces 2 is connected with corresponding one of the columns 1 through the lifting rod 402, and at least a part of each of the first connecting pieces 2 is wound in the spiral groove 4021;

When the lifting rod 402 moves in the up-and-down direction, the spiral groove 4021 is used for driving corresponding one of the first connecting pieces 2 to expand and contract, so as to adjust a length of each of the first connecting pieces 2 between two spiral grooves 4021.

In order to make the technical scheme of the disclosure easier to understand, the technical scheme of the disclosure will be further described below by taking the first direction consistent with the east-west direction and the second direction consistent with the north-south direction as examples, where the east-west direction and the north-south direction are shown in FIG. 1.

For example, as shown in FIG. 1, the first column 101 is located on the west side of the second column 102, the third column 103 is located on the west side of the fourth column 104, the first group of columns is located on the north side of the second group of columns. The first column 101 and the third column 103 correspond in the north-south direction, and the second column 102 and the fourth column 104 correspond in the north-south direction. The highest position and the lowest position of the movement of the lifting assembly 4 on each column 1 are the same. It can be understood that the photovoltaic panel 7 of the rotating flexible photovoltaic bracket 100 in the embodiment of the disclosure is in an initial state (for example, at 7:00 a.m.) presents a posture of high in the west and low in the east, that is, the second column 102 and the fourth column 104 are at the lowest point, and the first column 101 and the third column 103 are at the highest point. Of course, the rotating flexible photovoltaic bracket 100 of the embodiment of the disclosure presents the posture of the photovoltaic panel 7 in the end state (for example, at 19:00 pm) presents a posture of high in the east and low in the west, that is, the second column 102 and the fourth column 104 are located at the highest point, and the first column 101 and the third column 103 are located at the lowest point.

The initial length of the first connecting piece 2 is the linear distance between the lifting assembly 4 on the first column 101 at the highest point and the lifting assembly 4 on the fourth column 104 at the lowest point, plus the linear distance between the highest point and the lowest point of the lifting assembly 4 on the first column 101, plus the length of the two ends of the first connecting piece 4 connected with the first column 101 and the fourth column 104 through corresponding spiral groove 4021 respectively.

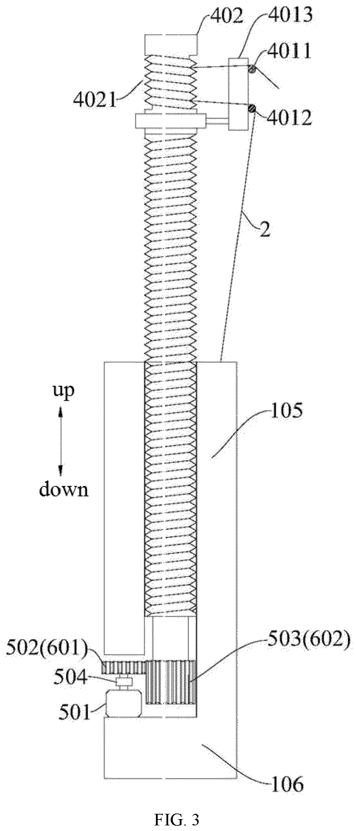

As shown in FIG. 3, when the lifting rod 402 rotates forward, the lifting rod 402 moves upward under the action of spiral transmission, and the first connecting piece 2 extends in from the upper end of the spiral groove 4021 and extends out from the lower end of the spiral groove 4021 under the action of the spiral groove 4021. When the lifting rod 402 rotates reversely, the lifting rod 402 moves downward under the action of spiral transmission, and the first connecting piece 2 extends in from the lower end of the spiral groove 4021 and extends out from the upper end of the spiral groove 4021 under the action of the spiral groove 4021.

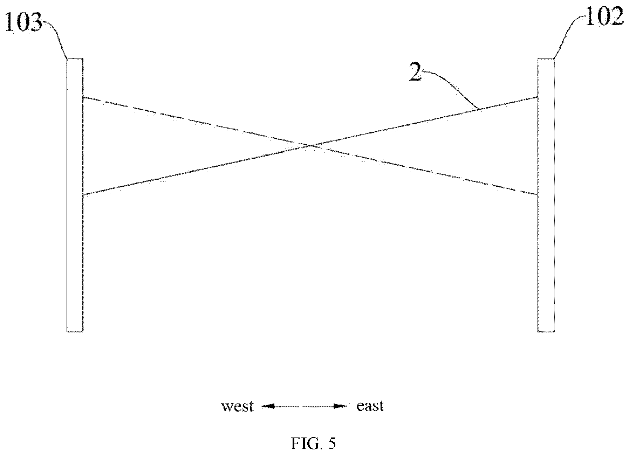

When the rotating flexible photovoltaic bracket 100 according to the embodiment of the disclosure is used, for example, when the sun is in the south at 12:00 noon, it is necessary to change the photovoltaic panel 7 from an inclined posture of being high in the west and low in the east to an inclined posture of being high in the north and low in the south (as shown in FIG 1). The lifting assembly 4 on the second column 102 is controlled to ascend, and meanwhile the lifting assembly 4 on the third column 103 is controlled to descend at the same speed as the lifting assembly 4 on the second column 102. So that the lifting assembly 4 on the second column 102 is raised to the same height as the lifting assembly 4 on the first column 101, and the lifting assembly 4 on the third column 103 is lowered to the same height as the lifting assembly 4 on the fourth column 104, so that the photovoltaic panels 7 present a posture of high in the north and low in the south. During ascending of the lifting assembly 4 on the second column 102, the spiral groove 4021 on the second column 102 drives the length of the first connecting piece 2 between the top end of the second column 102 and the spiral groove 4021 on the second column 102 to extend. During descending of the lifting assembly 4 on the third column 103, the spiral groove 4021 on the third column 103 drives the length of the first connecting piece 2 between the top end of the third column 103 and the spiral groove 4021 on the third column 103 to shorten, so as to compensate the distance change caused by the relative position change between the spiral groove 4021 on the second column 102 and the spiral groove 4021 on the third column 103. As shown in FIG. 5, the first connecting piece 2 connected between the second column 102 and the third column 103 is changed from the inclined state shown by dotted lines to the inclined state shown by solid lines, so that the length difference of the first connecting piece 2 generated by the movement of the lifting assembly 4 in up-and down direction forms an equal triangle. The upper and lower lengths of the first connecting piece 2 in the second column 102 and the third column 103 complement each other, so that the photovoltaic panels 7 present a posture of high in the north and low in the south.

For example, when the sun is in the west at 16:00 p.m., it is necessary to change the photovoltaic panels 7 from an inclined posture of high in the north and low in the south (as shown in FIG. 1) to an inclined posture of high in the east and low in the west. The lifting assembly 4 on the fourth column 104 is controlled to ascend, and at meanwhile, the lifting assembly 4 on the first column 101 is controlled to descend at the same speed as the lifting assembly 4 on the fourth column 104. So that the lifting assembly 4 on the fourth column 104 is raised to the same height as the lifting assembly 4 on the second column 102, and the lifting assembly 4 on the first column 101 is lowered to the same height as the lifting assembly 4 on the third column 103, so that the photovoltaic panels 7 present a posture of high in the north and low in the south. During ascending of the lifting assembly 4 on the fourth column 104, the spiral groove 4021 on the fourth column 104 drives the length of the first connecting piece 2 between the top end of the fourth column 104 and the spiral groove 4021 on the fourth column 104 to be shortened. During descending of the lifting assembly 4 on the first column 101, the spiral groove 4021 on the first column 101 drives the length of the first connecting piece 2 between the top end of the first column 101 and the spiral groove 4021 on the first column 101 to extend, so as to compensate for the distance change caused by the relative position change between the spiral groove 4021 on the fourth column 104 and the spiral groove 4021 on the first column 101.

Therefore, in the rotating flexible photovoltaic bracket 100 of the embodiment of the disclosure, the spiral groove 4021 is arranged on the lifting rod 402, and when the position of the spiral groove 4021 connecting the two ends of the first connecting piece 2 changes relatively, the spiral groove 4021 drives the first connecting piece 2 to expand and contract, so as to adjust the distance change of the spiral groove 4021 at the two ends of the first connecting piece 2 due to the relative position change, thereby facilitating the adjustment of the photovoltaic panels 7 of the rotating flexible photovoltaic bracket 100 of the embodiment of the disclosure.

Therefore, the rotating flexible photovoltaic bracket 100 of the embodiment of the disclosure has the advantages of convenient angle adjustment of the photovoltaic panels 7.

Optionally, the connecting piece is a steel strand.

In some embodiments, the lifting assembly 4 further includes a first rotating shaft 4011, and the first rotating shaft 4011 is used for supporting the first connecting piece 2 extending from an upper end of the spiral groove 4021, so that the first connecting piece 2 rotates spirally in the spiral groove 4021.

For example, as shown in FIG. 3, the axis of the first rotating shaft 4011 is arranged in the north-south direction, the first rotating shaft 4011 is arranged close to the upper end of the spiral groove 4021, and the first connecting piece 2 is wound around the first rotating shaft 4011 so that the first connecting piece 2 can extend in or out from the upper end of the spiral groove 4021.

Therefore, by arranging the first rotating shaft 4011, it is beneficial for the first connecting piece 2 to extend in or out from the upper end of the spiral groove 4021, and it is beneficial to improve the operation reliability of the rotating flexible photovoltaic bracket 100 of the embodiment of the disclosure.

In some embodiments, the lifting assembly 4 further includes a second rotating shaft 4012, the second rotating shaft 4012 and the first rotating shaft 4011 are arranged at intervals in the up-and-down direction, and the second rotating shaft 4012 is used for supporting the first connecting piece 2 extending from a lower end of the spiral groove 4021, so that the first connecting piece 2 rotates spirally in the spiral groove 4021.

For example, as shown in FIG. 3, the axis of the second rotating shaft 4012 is arranged in the north-south direction, and the second rotating shaft 4012 is arranged close to the lower end of the spiral groove 4021, and the first connecting piece 2 is wound around the second rotating shaft 4012 so that the first connecting piece 2 can extend in or out from the lower end of the spiral groove 4021.

Therefore, by arranging the second rotating shaft 4012, it is beneficial for the first connecting piece 2 to extend in or out from the lower end of the spiral groove 4021, and it is beneficial to improve the operation reliability of the rotating flexible photovoltaic bracket 100 of the embodiment of the disclosure.

In some embodiments, the lifting assembly 4 further includes a support frame 4013, the support frame 4013 is rotatably connected with the lifting rod 402 around an axis of the lifting rod 402, and each of the first rotating shaft 4011 and the second rotating shaft 4012 is connected with the support frame 4013.

For example, as shown in FIG. 3, the support frame 4013 has a first part and a second part which are connected. The first part is cylindrical and sleeved on the lifting rod 402, and can rotate around the axis of the lifting rod 402. The first rotating shaft 4011 and the second rotating shaft 4012 are rotatably arranged on the second part, so that the first rotating shaft 4011 and the second rotating shaft 4012 can support the first connecting piece 2.

Therefore, in the rotating flexible photovoltaic bracket 100 of the embodiment of the disclosure, by arranging that the support frame is rotatably connected with the lifting rod 402, so as to facilitate the installation of the first rotating shaft 4011 and the second rotating shaft 4012, thus making the rotating flexible photovoltaic bracket 100 of the embodiment of the disclosure simple in structure.

In some embodiments, the rotating flexible photovoltaic bracket further includes at least two mutually parallel second connecting pieces 3, where one end of each of the second connecting pieces 3 is connected with at least one of the first connecting pieces 2, and an other end of each of the second connecting pieces 3 is connected with at least one of the first connecting pieces 2, and the second connecting pieces 3 are used for installing the photovoltaic panels 7.

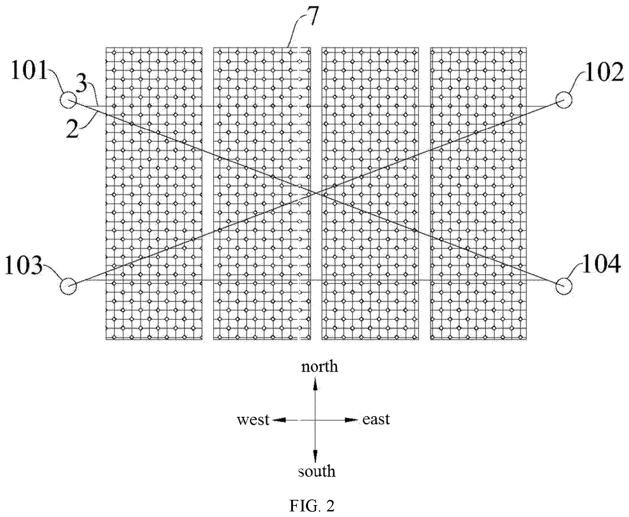

For example, as shown in FIGs. 1 and 2, there are two second connecting pieces 3, and the two second connecting pieces 3 are evenly spaced in the north-south direction, and the length direction of the two second connecting pieces 3 is parallel to the east-west direction. One end of the second connecting piece 3 on the north side is connected with one end of one of the first connecting pieces 2, the other end of the second connecting piece 3 on the north side is connected with one end of another first connecting piece 2. One end of the second connecting piece 3 on the south side is connected with one end of one of the first connecting pieces 2, and the other end of the second connecting piece 3 on the south side is connected with the other end of another first connecting piece 2. Photovoltaic panels 7 are mounted on two mutually parallel second connecting pieces 3.

Therefore, in the the rotating flexible photovoltaic bracket 100 according to the embodiment of the disclosure, by arranging at least two mutually parallel second connecting pieces 3 for installing photovoltaic panels 7, the photovoltaic panels 7 being installed on the first connecting piece 2 to affect the expansion and contraction of the first connecting piece 2 is prevented, thus the operation reliability of the rotating flexible photovoltaic bracket 100 according to the embodiment of the disclosure is improved.

Optionally, as shown in FIG. 5, the second connecting piece 3 is a connecting rod, and both ends of the second connecting piece 3 are respectively provided with sliding rails 301 extending along its length. The sliding rail 301 is provided with a slider 302 which is matched with the sliding rail 301 and the slider 302 can slide along the extending direction of the slide rail 301. The slider 302 is provided with a perforation 303, and the second connecting piece 3 is connected with the first connecting piece through the perforation 303.

The western end of the second connecting piece 3 is provided with a first sliding rail, the first sliding rail extends in the east-west direction. The first sliding rail is provided with a first slider, the first slider can move with the first sliding rail in the east-west direction. The first slider is provided with a first perforation arranged in the north-south direction, and the first connecting piece 2 passes through the first perforation.

The eastern end of the second connecting piece 3 is provided with a second sliding rail, the second sliding rail extends in the east-west direction. A second slider is provided on the second sliding rail, the second slider can slide with the second sliding rail movably in the east-west direction, and the second slider is provided with a second perforation arranged in the north-south direction.

Specifically, when the second connecting piece 3 is connected with the first connecting piece 2, for example, as shown in FIG. 1, the first connecting piece 2 connected between the first column 101 and the fourth column 104 passes through the first perforation on the first slider located at the western end of the second connecting piece 3 on the north side, and the first connecting piece 2 connected between the second column 102 and the third column 103 passes through the second perforation on the second slider located at the eastern end of the second connecting piece 3 on the north side, thereby the installation of the second connecting piece 3 on the north side is completed. The first connecting piece 2 connected between the second column 102 and the third column 103 passes through the first perforation on the first slider located at the western end of the second connecting piece 3 on the south side, and the first connecting piece 2 connected between the first column 101 and the fourth column 104 passes through the second perforation on the second slider located at the eastern end of the second connecting piece 3 on the south side, thus the installation of the second connecting piece 3 on the south side is completed.

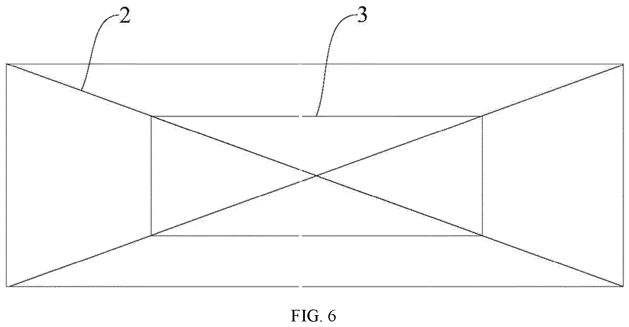

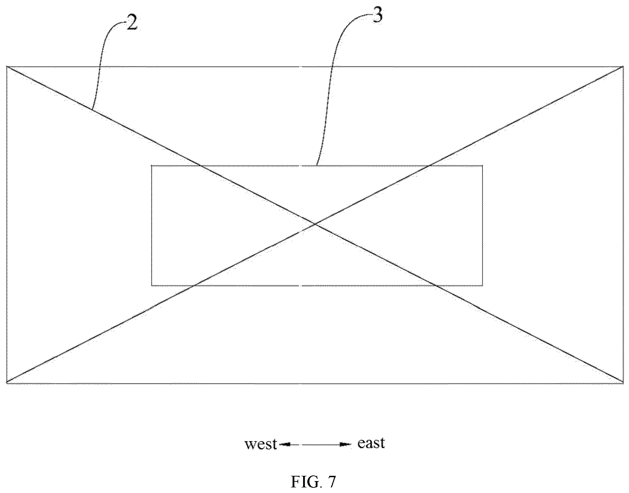

When in use, as shown in FIGs. 6 and 7, when the intersection angle between the two first connecting pieces 2 changes, the first slider and the second slider at the east and west ends of the second connecting piece 3 slide in the east-west direction to compensate for the displacement change of the two first connecting pieces 2 caused by the intersection angle change, thus facilitating the adjustment of the first connecting pieces 2 and further facilitating the adjustment of the rotating flexible photovoltaic bracket 100 of the embodiment of the disclosure.

In some embodiments, the rotating flexible photovoltaic bracket 100 further includes driving parts 501, each of the driving parts 501 is connected with the column 1 and each of the driving parts is used for driving corresponding the lifting rod to rotate.

For example, the driving part 501 is a driving motor, the driving motor is installed on the column 1 and the driving motor is connected with the lifting rod 402 to drive the lifting rod 402 to rotate.

Therefore, the driving part 501 is arranged to drive the lifting rod 402 to rotate, thereby facilitating the rotation of the lifting rod 402, and further facilitating the adjustment of the rotating flexible photovoltaic bracket 100 of the embodiment of the disclosure.

Optionally, the rotating flexible photovoltaic bracket 100 of the embodiment of the disclosure further includes a PLC (programmable logic controller) control system, PLC control system is electrically connected with the driving part 501, and PLC control system controls the rotation of the lifting rod 402 by controlling the driving part 501.

By setting the PLC control system, it is convenient to control the lifting speed of the lifting assembly 4, so as to facilitate the adjustment of the lifting speed of the lifting assembly 4 connected at both ends of the first connecting piece 2, to facilitate the adjustment of the angle of the photovoltaic panels 7, and to improve the operation reliability of the rotating flexible photovoltaic bracket 100 of the embodiment of the disclosure.

In some embodiments, the rotating flexible photovoltaic bracket 100 further includes active parts 502 and passive parts 503, one of the active parts 502 is arranged on each of the columns 1, each of the driving parts 501 is connected with corresponding one of the active parts 502, each of the passive parts 503 is connected with the lifting rod 402, and the active parts 502 are matched with the passive parts 503 so that each of the driving parts 501 drives the lifting rod 402 to rotate.

By arranging the active part 502 and the passive part 503, the driving part 501 is beneficial to drive the lifting rod 402 to rotate, thus further facilitating the adjustment of the rotating flexible photovoltaic bracket 100 of the embodiment of the disclosure.

Optionally, the active parts 502 is a first gear 601, and each of the passive parts 503 is a second gear 602, the first gear 601 is meshed with the second gear 602, and a length of the second gear 602 in an extension direction thereof is greater than a length of the first gear 601 in an extension direction thereof.

For example, as shown in FIG. 3, the first gear 601 is sleeved on the output shaft of the driving motor, which drives the first gear 601 to rotate forward when the driving motor rotates forward, and the first gear 601 drives the second gear 602 to rotate forward, the second gear 602 drives the lifting rod 402 to rotate forward, and when the lifting rod 402 rotates forward, it moves upward under the action of screw transmission.. That is to say, while the second gear 602 rotates, it moves upward under the drive of the lifting rod 402. Because the length of the second gear 602 in the up-and-down direction is greater than the length of the second gear 601 in the up-and-down direction, so that the first gear 601 and the second gear 602 are always in meshing state.

Therefore, in the rotating flexible photovoltaic bracket 100 of the embodiment of the disclosure, by arranging the active part 502 and the passive part 503 in the form of gear pair transmission, it is beneficial to improving the transmission stability between the active part 502 and the passive part 503 and improving the working reliability of the rotating flexible photovoltaic bracket 100 of the embodiment of the disclosure .

Optionally, the rotating flexible photovoltaic bracket 100 further includes a reducer 504, and the driving part 501 and the first gear 601 are connected through the reducer 504.

By arranging the reducer 504 between the driving motor and the first gear 601, the rotating speed of the lifting rod 402 can be better controlled, which is beneficial to controlling the rotating speed of the lifting rod 402 and further facilitating the adjustment of the rotating flexible photovoltaic bracket 100 in the embodiment of the disclosure.

In some embodiments, each of the columns 1 further includes an installation section 106, the threaded section 105 is connected with the installation section 106 in sequence from top to bottom, and the installation section 106 is used for being installed on a foundation.

For example, as shown in FIG. 3, the peripheral surface of the installation section 106 is smooth surface, and the installation section 106 is installed on a foundation, for example, the installation section 106 is installed on a reinforced concrete foundation.

Therefore, in the rotating flexible photovoltaic bracket 100 in the embodiment of the disclosure, the column 1 is provided with the installation section 106, so that the column 1 can be installed on the foundation, thereby facilitating the installation of the rotating flexible photovoltaic bracket 100.

In the description of the disclosure, it should be understood that the azimuth or positional relationship indicated by the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial" and "circumferential" is based on the azimuth or positional relationship shown in the attached drawings, only for the convenience of describing this disclosure and simplifying the description, and does not indicate or imply that the referred device or element must have a specific orientation, be constructed and operated in a specific orientation, so it cannot be understood as a limitation of this disclosure.

In addition, the terms "first" and "second" are only used for descriptive purposes, and cannot be understood as indicating or implying relative importance or implicitly indicating the number of indicated technical features. Therefore, the features defined as "first" and "second" can explicitly or implicitly include at least one of these features. In the description of this disclosure, "multiple" means at least two, such as two, three, etc., unless otherwise specifically defined.

In this disclosure, unless otherwise specified and limited, the terms "installation", "connect", "connection" and "fix" should be broadly understood, for example, it can be fixed connection, can also be detachable connection or integrated; it can be mechanically connected, can also be electrically connected or communicated with each other; it can be directly connected, can also be indirectly connected through an intermediary, and it can be the internal connection of two elements or the interaction relation between two elements, unless otherwise specified. For those skilled in the art, the specific meanings of the above terms in this disclosure can be understood according to specific situations.

In this disclosure, unless otherwise specified and limited, the first feature "above" or "below" the second feature may be that the first and second features are in direct contact, or the first and second features are in indirect contact through an intermediary. Moreover, the first feature is "on", "above" and "over" the second feature, which can mean that the first feature is directly above or obliquely above the second feature, or just means that the horizontal height of the first feature is higher than that of the second feature. The first feature is "under", "below" and "lower" the second feature can mean that the first feature is directly or obliquely below the second feature, or just means that the horizontal height of the first feature is smaller than that of the second feature.

In this disclosure, the terms "one embodiment", "some embodiments", "example", "specific example" or "some examples" etc. mean that a specific feature, structure, material or characteristic described in connection with this embodiment or example is included in at least one embodiment or example of this disclosure. In this description, the schematic expressions of the above terms are not necessarily aimed at the same embodiment or example. Moreover, the specific features, structures, materials or characteristics described may be combined in any one or more embodiments or examples in a suitable manner. In addition, those skilled in the art can integrate and combine different embodiments or examples and features of different embodiments or examples described in this description without contradicting each other.

Although the above-mentioned embodiments have been shown and described, it can be understood that the above-mentioned embodiments are exemplary and cannot be understood as limitations of the disclosure, and changes, modifications, substitutions and variations made to the above-mentioned embodiments by those skilled in the art are within the protection scope of the disclosure.

## Claims

1. A rotating flexible photovoltaic bracket (100), comprising:
columns (1), wherein each of the columns (1) comprises a threaded section (105), and the threaded section (105) is provided with an internal thread; a plurality of the columns (1) are provided, wherein the plurality of columns (1) comprise a first group of columns and a second group of columns, wherein the first group of columns comprises a first column (101) and a second column (102) arranged at intervals along a first direction, and the second group of columns comprises a third column (103) and a fourth column (104) arranged at intervals along the first direction; the first group of columns and the second group of columns are arranged along a second direction, the first direction is orthogonal to an up-and-down direction, the second direction is orthogonal to the up-and-down direction, and an angle is formed between the first direction and the second direction;
first connecting pieces (2), wherein the first connecting pieces (2) are provided at least two and are used for installing photovoltaic panels (7); and
lifting assemblies (4), wherein a plurality of lifting assemblies (4) are provided, the plurality of lifting assemblies (4) correspond to the plurality of columns (1) one by one, and each of the lifting assemblies (4) is connected with a corresponding one of the columns (1) and a position of each of the lifting assemblies (4) relative to the corresponding one of the columns (1) is adjustable in the up-and-down direction;
each of the lifting assemblies (4) comprises a lifting rod (402), a lower end of the lifting rod (402) extends into a corresponding one of the columns (1), and the lifting rod (402) is provided with an external thread being matched with the internal thread, so that the lifting rod (402) is capable of moving in the up-and-down direction along corresponding one of the columns (1) under an action of thread transmission;
and wherein :
at least one of the first connecting pieces (2) is connected between the first column and (101) the fourth column (104); at least one of the first connecting pieces (2) is connected between the second column (102) and the third column (103), and the first connecting pieces (2) between the first column (101) and the fourth column (104) and the first connecting pieces (2) between the second column (102) and the third column (103) are crossed;
the lifting rod (402) is provided with a spiral groove (4021), the spiral groove (4021) is circumferentially arranged around the lifting rod (402), a rotation direction of the spiral groove (4021) is opposite to a rotation direction of the external thread, each of the first connecting pieces (2) is connected with corresponding one of the columns (1) through the lifting rod (402), and at least a part of each of the first connecting pieces (2) is wound in the spiral groove (4021);
wherein when the lifting rod (402) moves in the up-and-down direction, the spiral groove (4021) is used for driving corresponding one of the first connecting pieces (2) to expand and contract, so as to adjust a length of each of the first connecting pieces (2) between two spiral grooves (4021).

2. The rotating flexible photovoltaic bracket (100) according to claim 1, wherein each of the lifting assemblies (4) further comprises a first rotating shaft (4011), and the first rotating shaft (4011) is used for supporting corresponding one of the first connecting pieces (2) extending from an upper end of the spiral groove (4021), so that the corresponding one of the first connecting pieces (2) rotates spirally in the spiral groove (4021).

3. The rotating flexible photovoltaic bracket (100) according to claim 2, wherein each of the lifting assemblies further (4) comprises a second rotating shaft (4012), the second rotating shaft (4012) and the first rotating shaft (4011) are arranged at intervals in the up-and-down direction, and the second rotating shaft (4012) is used for supporting corresponding one of the first connecting pieces (2) extending from a lower end of the spiral groove (4021), so that each of the first connecting pieces (2) rotates spirally in the spiral groove (4021).

4. The rotating flexible photovoltaic bracket (100) according to claim 3, wherein each of the lifting assemblies (4) further comprises a support frame (4013), the support frame (4013) is rotatably connected with the lifting rod (402) around an axis of the lifting rod (402), and each of the first rotating shaft (4011) and the second rotating shaft (4012) is connected with the support frame (4013).

5. The rotating flexible photovoltaic bracket (100) according to any one of claims 1-4, further comprising at least two mutually parallel second connecting pieces (3), wherein one end of each of the second connecting pieces (3) is connected with at least one of the first connecting pieces (2), and an other end of each of the second connecting pieces (3) is connected with at least one of the first connecting pieces (2), and the second connecting pieces (3) are used for installing the photovoltaic panels (7).

6. The rotating flexible photovoltaic bracket (100) according to claim 5, wherein each of the second connecting pieces (3) is a connecting rod, and both ends of each of the second connecting pieces (3) are respectively provided with sliding rails (301) extending along a length thereof; each of the sliding rails (301) is provided with a slider (302) matched with corresponding one of the sliding rails (301), the slider (302) is capable of sliding along an extending direction of corresponding one of the sliding rails (301); the slider (302) is provided with a perforation (303), and each of the second connecting pieces (3) is connected with corresponding one of the first connecting pieces (2) through the perforation (303).

7. The rotating flexible photovoltaic bracket (100) according to any one of claims 1-4, wherein the rotating flexible photovoltaic bracket (100) further comprises driving parts (501), each of the driving parts (501) is connected with corresponding one of the columns (1) and each of the driving parts (501) is used for driving corresponding the lifting rod (402) to rotate.

8. The rotating flexible photovoltaic bracket (100) according to claim 7, wherein the rotating flexible photovoltaic bracket (100) further comprises active parts (502) and passive parts (503), one of the active parts (502) is arranged on each of the columns (1), each of the driving parts is (501) connected with corresponding one of the active parts (502), each of the passive parts (503) is connected with the lifting rod (402), and the active parts (502) are matched with the passive parts (503) so that each of the driving parts (501) drives the lifting rod (402) to rotate.

9. The rotating flexible photovoltaic bracket (100) according to claim 8, wherein each of the active parts (502) is a first gear (601), and each of the passive parts (503) is a second gear (602), the first gear (601) is meshed with the second gear (602), and a length of the second gear (602) in an extension direction thereof is greater than a length of the first gear (601) in an extension direction thereof.

10. The rotating flexible photovoltaic bracket (100) according to claim 9, wherein each of the columns (1) further comprises an installation section (106), the threaded section (105) is connected with the installation section (106) in sequence from top to bottom, and the installation section (106) is used for being installed on a foundation.

## Patentansprüche

1. Ein rotierender flexibler fotovoltaischer Träger (100), umfassend:
Säulen (1), wobei jede der Säulen (1) einen Gewindeabschnitt (105) umfasst und der Gewindeabschnitt (105) mit einem Innengewinde versehen ist; eine Vielzahl der Säulen (1) ist vorgesehen, wobei die Vielzahl von Säulen (1) eine erste Gruppe von Säulen und eine zweite Gruppe von Säulen umfasst, wobei die erste Gruppe von Säulen eine erste Säule (101) und eine zweite Säule (102) umfasst, die in Abständen entlang einer ersten Richtung angeordnet sind, und die zweite Gruppe von Säulen eine dritte Säule (103) und eine vierte Säule (104) umfasst, die in Abständen entlang der ersten Richtung angeordnet sind; die erste Gruppe von Säulen und die zweite Gruppe von Säulen sind entlang einer zweiten Richtung angeordnet, die erste Richtung ist orthogonal zu einer Auf-und-Ab-Richtung, die zweite Richtung ist orthogonal zu der Auf-und-Ab-Richtung, und ein Winkel wird zwischen der ersten Richtung und der zweiten Richtung gebildet;
erste Verbindungsteile (2), wobei die ersten Verbindungsteile (2) in einer Anzahl von mindestens zwei vorgesehen sind und zur Installation von Fotovoltaikpaneelen (7) verwendet werden; und
Hebebaugruppen (4), wobei eine Vielzahl von Hebebaugruppen (4) vorgesehen ist, die Vielzahl von Hebebaugruppen (4) der Vielzahl von Säulen (1) eins-zueins entspricht, und jede der Hebebaugruppen (4) mit einer entsprechenden der Säulen (1) verbunden ist und eine Position jeder der Hebebaugruppen (4) relativ zu der entsprechenden der Säulen (1) in der Auf-und-Ab-Richtung einstellbar ist;
wobei jede der Hebebaugruppen (4) eine Hebestange (402) umfasst, ein unteres Ende der Hebestange (402) sich in eine entsprechende der Säulen (1) erstreckt, und die Hebestange (402) mit einem Außengewinde versehen ist, das an das Innengewinde angepasst ist, sodass die Hebestange (402) in der Lage ist, sich in der Auf-und-Ab-Richtung entlang der entsprechenden der Säulen (1) unter einer Wirkung einer Gewindeübertragung zu bewegen;
und wobei
mindestens eines der ersten Verbindungsteile (2) zwischen der ersten Säule (101) und der vierten Säule (104) verbunden ist; mindestens eines der ersten Verbindungsteile (2) zwischen der zweiten Säule (102) und der dritten Säule (103) verbunden ist, und die ersten Verbindungsteile (2) zwischen der ersten Säule (101) und der vierten Säule (104) und die ersten Verbindungsteile (2) zwischen der zweiten Säule (102) und der dritten Säule (103) gekreuzt sind;
die Hebestange (402) mit einer Spiralnut (4021) versehen ist, die Spiralnut (4021) in Umfangsrichtung um die Hebestange (402) herum angeordnet ist, eine Rotationsrichtung der Spiralnut (4021) einer Rotationsrichtung des Außengewindes entgegengesetzt ist, jedes der ersten Verbindungsteile (2) mit einer entsprechenden der Säulen (1) durch die Hebestange (402) verbunden ist, und zumindest ein Teil jedes der ersten Verbindungsteile (2) in der Spiralnut (4021) aufgewickelt ist;
wobei, wenn sich die Hebestange (402) in der Auf-und-Ab-Richtung bewegt, die Spiralnut (4021) verwendet wird, um ein entsprechendes der ersten Verbindungsteile (2) zum Ausdehnen und Zusammenziehen anzutreiben, um so eine Länge jedes der ersten Verbindungsteile (2) zwischen zwei Spiralnuten (4021) einzustellen.

2. Der rotierende flexible fotovoltaische Träger (100) nach Anspruch 1, wobei jede der Hebebaugruppen (4) ferner eine erste Rotationswelle (4011) umfasst, und die erste Rotationswelle (4011) zum Stützen eines entsprechenden der ersten Verbindungsteile (2) verwendet wird, das sich von einem oberen Ende der Spiralnut (4021) erstreckt, sodass das entsprechende der ersten Verbindungsteile (2) spiralförmig in der Spiralnut (4021) rotiert.

3. Der rotierende flexible fotovoltaische Träger (100) nach Anspruch 2, wobei jede der Hebebaugruppen (4) ferner eine zweite Rotationswelle (4012) umfasst, die zweite Rotationswelle (4012) und die erste Rotationswelle (4011) in Abständen in der Auf-und-Ab-Richtung angeordnet sind, und die zweite Rotationswelle (4012) zum Stützen eines entsprechenden der ersten Verbindungsteile (2) verwendet wird, das sich von einem unteren Ende der Spiralnut (4021) erstreckt, sodass jedes der ersten Verbindungsteile (2) spiralförmig in der Spiralnut (4021) rotiert.

4. Der rotierende flexible fotovoltaische Träger (100) nach Anspruch 3, wobei jede der Hebebaugruppen (4) ferner einen Stützrahmen (4013) umfasst, der Stützrahmen (4013) drehbar mit der Hebestange (402) um eine Achse der Hebestange (402) verbunden ist, und jede der ersten Rotationswelle (4011) und der zweiten Rotationswelle (4012) mit dem Stützrahmen (4013) verbunden ist.

5. Der rotierende flexible fotovoltaische Träger (100) nach einem der Ansprüche 1 bis 4, ferner umfassend mindestens zwei zueinander parallele zweite Verbindungsteile (3), wobei ein Ende jedes der zweiten Verbindungsteile (3) mit mindestens einem der ersten Verbindungsteile (2) verbunden ist, und ein anderes Ende jedes der zweiten Verbindungsteile (3) mit mindestens einem der ersten Verbindungsteile (2) verbunden ist, und die zweiten Verbindungsteile (3) zum Installieren der Fotovoltaikpaneele (7) verwendet werden.

6. Der rotierende flexible fotovoltaische Träger (100) nach Anspruch 5, wobei jedes der zweiten Verbindungsteile (3) eine Verbindungsstange ist und beide Enden jedes der zweiten Verbindungsteile (3) jeweils mit Gleitschienen (301) versehen sind, die sich entlang einer Länge derselben erstrecken; jede der Gleitschienen (301) mit einem Schieber (302) versehen ist, der an eine entsprechende der Gleitschienen (301) angepasst ist, wobei der Schieber (302) in der Lage ist, entlang einer Erstreckungsrichtung einer entsprechenden der Gleitschienen (301) zu gleiten; der Schieber (302) mit einer Perforation (303) versehen ist und jedes der zweiten Verbindungsteile (3) mit einem entsprechenden der ersten Verbindungsteile (2) durch die Perforation (303) verbunden ist.

7. Der rotierende flexible fotovoltaische Träger (100) nach einem der Ansprüche 1 bis 4, wobei der rotierende flexible fotovoltaische Träger (100) ferner Antriebsteile (501) umfasst, jedes der Antriebsteile (501) mit einer entsprechenden der Säulen (1) verbunden ist und jedes der Antriebsteile (501) verwendet wird, um die entsprechende Hebestange (402) zur Rotation anzutreiben.

8. Der rotierende flexible fotovoltaische Träger (100) nach Anspruch 7, wobei der rotierende flexible fotovoltaische Träger (100) ferner aktive Teile (502) und passive Teile (503) umfasst, eines der aktiven Teile (502) an jeder der Säulen (1) angeordnet ist, jedes der Antriebsteile (501) mit einem entsprechenden der aktiven Teile (502) verbunden ist, jedes der passiven Teile (503) mit der Hebestange (402) verbunden ist und die aktiven Teile (502) an die passiven Teile (503) angepasst sind, sodass jedes der Antriebsteile (501) die Hebestange (402) zur Rotation antreibt.

9. Der rotierende flexible fotovoltaische Träger (100) nach Anspruch 8, wobei jedes der aktiven Teile (502) ein erstes Zahnrad (601) ist und jedes der passiven Teile (503) ein zweites Zahnrad (602) ist, das erste Zahnrad (601) mit dem zweiten Zahnrad (602) in Eingriff steht und eine Länge des zweiten Zahnrads (602) in dessen Erstreckungsrichtung größer ist als eine Länge des ersten Zahnrads (601) in dessen Erstreckungsrichtung.

10. Der rotierende flexible fotovoltaische Träger (100) nach Anspruch 9, wobei jede der Säulen (1) ferner einen Installationsabschnitt (106) umfasst, der Gewindeabschnitt (105) mit dem Installationsabschnitt (106) in Reihenfolge von oben nach unten verbunden ist und der Installationsabschnitt (106) zur Installation auf einem Fundament verwendet wird.

## Revendications

1. Un support photovoltaïque flexible rotatif (100), comprenant:
des colonnes (1), dans lequel chacune des colonnes (1) comprend une section filetée (105), et la section filetée (105) est pourvue d'un filetage interne; une pluralité des colonnes (1) est prévue, dans lequel la pluralité de colonnes (1) comprend un premier groupe de colonnes et un deuxième groupe de colonnes, dans lequel le premier groupe de colonnes comprend une première colonne (101) et une deuxième colonne (102) agencées à des intervalles le long d'une première direction, et le deuxième groupe de colonnes comprend une troisième colonne (103) et une quatrième colonne (104) agencées à des intervalles le long de la première direction; le premier groupe de colonnes et le deuxième groupe de colonnes sont agencés le long d'une seconde direction, la première direction est orthogonale à une direction haut-bas, la seconde direction est orthogonale à la direction haut-bas, et un angle est formé entre la première direction et la seconde direction;
des premières pièces de connexion (2), dans lequel les premières pièces de connexion (2) sont prévues au moins au nombre de deux et sont utilisées pour installer des panneaux photovoltaïques (7); et
des ensembles de levage (4), dans lequel une pluralité d'ensembles de levage (4) est prévue, la pluralité d'ensembles de levage (4) correspond à la pluralité de colonnes (1) un à un, et chacun des ensembles de levage (4) est connecté à l'une correspondante des colonnes (1) et une position de chacun des ensembles de levage (4) par rapport à l'une correspondante des colonnes (1) est ajustable dans la direction haut-bas;
chacun des ensembles de levage (4) comprend une tige de levage (402), une extrémité inférieure de la tige de levage (402) s'étend dans l'une correspondante des colonnes (1), et la tige de levage (402) est pourvue d'un filetage externe qui correspond au filetage interne, de sorte que la tige de levage (402) est capable de se déplacer dans la direction haut-bas le long de l'une correspondante des colonnes (1) sous une action de transmission par filetage;
et dans lequel
au moins l'une des premières pièces de connexion (2) est connectée entre la première colonne (101) et la quatrième colonne (104); au moins l'une des premières pièces de connexion (2) est connectée entre la deuxième colonne (102) et la troisième colonne (103), et les premières pièces de connexion (2) entre la première colonne (101) et la quatrième colonne (104) et les premières pièces de connexion (2) entre la deuxième colonne (102) et la troisième colonne (103) sont croisées;
la tige de levage (402) est pourvue d'une rainure spirale (4021), la rainure spirale (4021) est agencée de manière circonférentielle autour de la tige de levage (402), une direction de rotation de la rainure spirale (4021) est opposée à une direction de rotation du filetage externe, chacune des premières pièces de connexion (2) est connectée à l'une correspondante des colonnes (1) par l'intermédiaire de la tige de levage (402), et au moins une partie de chacune des premières pièces de connexion (2) est enroulée dans la rainure spirale (4021);
dans lequel, lorsque la tige de levage (402) se déplace dans la direction haut-bas, la rainure spirale (4021) est utilisée pour entraîner l'une correspondante des premières pièces de connexion (2) à s'étendre et se contracter, de manière à ajuster une longueur de chacune des premières pièces de connexion (2) entre deux rainures spirales (4021).

2. Le support photovoltaïque flexible rotatif (100) selon la revendication 1, dans lequel chacun des ensembles de levage (4) comprend en outre un premier arbre rotatif (4011), et le premier arbre rotatif (4011) est utilisé pour supporter l'une correspondante des premières pièces de connexion (2) s'étendant depuis une extrémité supérieure de la rainure spirale (4021), de sorte que l'une correspondante des premières pièces de connexion (2) tourne en spirale dans la rainure spirale (4021).

3. Le support photovoltaïque flexible rotatif (100) selon la revendication 2, dans lequel chacun des ensembles de levage (4) comprend en outre un second arbre rotatif (4012), le second arbre rotatif (4012) et le premier arbre rotatif (4011) sont agencés à des intervalles dans la direction haut-bas, et le second arbre rotatif (4012) est utilisé pour supporter l'une correspondante des premières pièces de connexion (2) s'étendant depuis une extrémité inférieure de la rainure spirale (4021), de sorte que chacune des premières pièces de connexion (2) tourne en spirale dans la rainure spirale (4021).

4. Le support photovoltaïque flexible rotatif (100) selon la revendication 3, dans lequel chacun des ensembles de levage (4) comprend en outre un cadre de support (4013), le cadre de support (4013) est connecté de manière rotative à la tige de levage (402) autour d'un axe de la tige de levage (402), et chacun parmi le premier arbre rotatif (4011) et le second arbre rotatif (4012) est connecté au cadre de support (4013).

5. Le support photovoltaïque flexible rotatif (100) selon l'une quelconque des revendications 1 à 4, comprenant en outre au moins deux secondes pièces de connexion (3) mutuellement parallèles, dans lequel une extrémité de chacune des secondes pièces de connexion (3) est connectée à au moins l'une des premières pièces de connexion (2), et une autre extrémité de chacune des secondes pièces de connexion (3) est connectée à au moins l'une des premières pièces de connexion (2), et les secondes pièces de connexion (3) sont utilisées pour installer les panneaux photovoltaïques (7).

6. Le support photovoltaïque flexible rotatif (100) selon la revendication 5, dans lequel chacune des secondes pièces de connexion (3) est une tige de connexion, et les deux extrémités de chacune des secondes pièces de connexion (3) sont respectivement pourvues de rails de coulissement (301) s'étendant sur une longueur de celles-ci; chacun des rails de coulissement (301) est pourvu d'un coulisseau (302) correspondant à l'un correspondant des rails de coulissement (301), le coulisseau (302) est capable de glisser le long d'une direction d'extension de l'un correspondant des rails de coulissement (301); le coulisseau (302) est pourvu d'une perforation (303), et chacune des secondes pièces de connexion (3) est connectée à l'une correspondante des premières pièces de connexion (2) à travers la perforation (303).

7. Le support photovoltaïque flexible rotatif (100) selon l'une quelconque des revendications 1 à 4, dans lequel le support photovoltaïque flexible rotatif (100) comprend en outre des pièces d'entraînement (501), chacune des pièces d'entraînement (501) est connectée à l'une correspondante des colonnes (1) et chacune des pièces d'entraînement (501) est utilisée pour entraîner la tige de levage correspondante (402) en rotation.

8. Le support photovoltaïque flexible rotatif (100) selon la revendication 7, dans lequel le support photovoltaïque flexible rotatif (100) comprend en outre des pièces actives (502) et des pièces passives (503), l'une des pièces actives (502) est agencée sur chacune des colonnes (1), chacune des pièces d'entraînement (501) est connectée à l'une correspondante des pièces actives (502), chacune des pièces passives (503) est connectée à la tige de levage (402), et les pièces actives (502) sont appariées avec les pièces passives (503) de sorte que chacune des pièces d'entraînement (501) entraîne la tige de levage (402) en rotation.

9. Le support photovoltaïque flexible rotatif (100) selon la revendication 8, dans lequel chacune des pièces actives (502) est un premier engrenage (601), et chacune des pièces passives (503) est un second engrenage (602), le premier engrenage (601) est engrené avec le second engrenage (602), et une longueur du second engrenage (602) dans sa direction d'extension est supérieure à une longueur du premier engrenage (601) dans sa direction d'extension.

10. Le support photovoltaïque flexible rotatif (100) selon la revendication 9, dans lequel chacune des colonnes (1) comprend en outre une section d'installation (106), la section filetée (105) est connectée à la section d'installation (106) en séquence de haut en bas, et la section d'installation (106) est utilisée pour être installée sur une fondation.
